(19) Europäisches Patentamt
European Patent Office
Office européen des brevets

(11) EP 1 172 459 A2

(12) EUROPÄISCHE PATENTANMELDUNG

(43) Veröffentlichungstag:
**16.01.2002 Patentblatt 2002/03**

(21) Anmeldenummer: **01114775.8**

(22) Anmeldetag: **26.06.2001**

(51) Int Cl.[7]: **C23C 20/00**, C23C 20/02, C23C 20/04, C23C 20/06, C23C 20/08, C03C 17/00, C04B 41/45, B05D 1/26, B05D 1/34, B05D 1/36, B05D 1/40

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **29.06.2000 DE 10031587**

(71) Anmelder: **BASF AKTIENGESELLSCHAFT
67056 Ludwigshafen (DE)**

(72) Erfinder:
- **Sterzel, Hans-Josef, Dr.
67125 Dannstadt-Schauernheim (DE)**
- **Kühling, Klaus, Dr.
67112 Mutterstadt (DE)**

(74) Vertreter: **Isenbruck, Günter, Dr. et al
Patent- und Rechtsanwälte,
Bardehle-Pagenberg-Dost-Altenburg-Geissler-Isenbruck Theodor-Heuss-Anlage 12
68165 Mannheim (DE)**

(54) **Dosierung von Suspensionen im Mikromassstab zur Herstellung von Materialproben in der kombinatorischen Materialforschung**

(57) In einem Verfahren zur kombinatorischen Herstellung von Materialproben in Form einer zweidimensionalen Matrix im Oberflächenbereich eines flächigen Substrats werden mindestens zwei unterschiedliche dosierfähige Materialkomponenten als Suspension aus einer oder mehreren Dosiervorrichtungen, die die Abgabe einzelner Suspensionstropfen erlauben, auf dieselbe Stelle des Substrats dosiert, so daß an unterschiedlichen Oberflächenbereichen des Substrats Materialien mit unterschiedlicher Zusammensetzung erhalten werden.

EP 1 172 459 A2

## Beschreibung

Die Erfindung betrifft Verfahren zur kombinatorischen Herstellung von Materialproben in Form einer zweidimensionalen Matrix im Oberflächenbereich eines flächigen Substrats. Zudem betrifft die Erfindung ein Verfahren zur kombinatorischen Testung von so erhaltenen Materialproben.

Die parallelisierte Herstellung und sehr schnelle serielle oder parallele Testung von Materialien mit geeigneten physikalischen oder chemischen Eigenschaften ist ein Gebiet in der Materialforschung, das gegenwärtig stark an Beachtung gewinnt.

Die WO 98/47613 offenbart eine Reihe von Verfahren, mit denen mittels Sputter-, CVD-oder PVD-Techniken Bibliotheken von potentiell interessanten Materialien erzeugt werden können. Im Kern betrifft diese Anmeldung die Verwendung geeigneter Maskentechniken, die eine definierte Abscheidung von mindestens 2 Komponenten (die als getrennte Substrate vorliegen) auf einem Substrat ermöglicht, wodurch Kompositmaterialien erhalten werden. Weiterhin können mit dem Verfahren durch Erzeugung von Gradienten auf dem besputterten Substrat komplette Bibliotheken von Materialien unterschiedlicher Zusammensetzung erzeugt werden.

Die beschriebenen Verfahren weisen eine Reihe von Nachteilen auf. Zum einen werden kontinuierliche kompakte Bibliotheken auf einem Substrat erzeugt, die erst nachträglich durch mechanische Trennung auf gewünschte Eigenschaften separat voneinander getestet und bezüglich ihrer Zusammensetzung analysiert werden können. Zum anderen sind die durch diese Substratbeschichtungstechniken hergestellten Probenmengen sehr klein (wenige Milligramm oder Bruchteile davon als dünne Schichten auf Substraten mit Schichtdicken im Nanometer- bis unteren Mikrometer-Bereich), so daß eine definierte Behandlung wie Sinterprozesse oder Behandlung mit bestimmten Medien (Flüssigkeiten, Gase) Schwierigkeiten bereiten, insbesondere bei der Reproduktion von Prozeßparametern oder der reproduzierbaren Dosierung von Probenmengen. Ein weiterer Nachteil des Sputterverfahrens besteht darin, daß sich die Morphologie der hergestellten Materialien hinsichtlich Kristallinität und Korngröße sehr von der durch konventionelle Methoden, also durch Sintern von Pulvermischungen hergestellter Materialien unterscheiden kann. Damit ist ein Erfolg dieser kombinatorischen Methode unsicher, weil Materialeigenschaften wie zum Beispiel Härte, Ionenleitfähigkeit, Wärmeleitfähigkeit, Dielektrizitätskonstante, elektrische Leitfähigkeit, Thermokraft, magnetische Eigenschaften, Porosität unter anderem in hohem Maße von der Kristallinität, der kristallographischen Beschaffenheit der Kristallite bzw. der Feinteiligkeit der Partikel, den Defekten und Korngrenzen und anderen stark von den Herstellparametern beeinflußbaren Parametern und den Ausgangspulvern abhängen.

Die prioritätsältere, nicht vorveröffentlichte DE-A 199 55 789 betrifft ein Verfahren zur kombinatorischen Herstellung einer Bibliothek von Materialien, bei dem mindestens zwei unterschiedliche sprühfähige Materialkomponenten aus mindestens zwei Sprühdüsen auf ein Substrat gesprüht werden. Insbesondere wird dabei eine Spraypyrolyse durchgeführt.

Aufgabe der vorliegenden Erfindung ist die Bereitstellung eines Verfahrens zur kombinatorischen Herstellung von Materialproben in Form einer zweidimensionalen Matrix im Oberflächenbereich eines flächigen Substrats, das die Nachteile der bekannten Verfahren vermeidet und eine vereinfachte Verfahrensführung zuläßt. Zudem soll eine zuverlässige apparative Auslegung des Verfahrens bereitgestellt werden. Die erhaltenen Materialien sollen möglichst praxisnah hergestellt und untersucht werden, so daß spezielle, durch das kombinatorische Herstellungsverfahren bewirkte Effekte unterdrückt werden.

Die Aufgabe wird erfindungsgemäß gelöst durch ein Verfahren zur kombinatorischen Herstellung von Materialproben in Form einer zweidimensionalen Matrix im Oberflächenbereich eines flächigen Substrats, bei dem mindestens zwei unterschiedliche dosierfähige Materialkomponenten als Suspension aus einer oder mehreren Dosiervorrichtungen, die die Abgabe einzelner Suspensionstropfen erlauben, auf dieselbe Stelle des Substrats dosiert werden, so daß an unterschiedlichen Oberflächenbereichen des Substrats Materialien mit unterschiedlicher Zusammensetzung erhalten werden.

Das erfindungsgemäße Verfahren wird durch Anwendung spezieller Dispergierhilfsmittel und Dispergiertechniken, wie sie nachstehend beschrieben sind, besonders vorteilhaft ausgeführt.

Vorzugsweise ist das flächige Substrat dabei horizontal angeordnet und wird im wesentlichen vertikal, d.h. von oben beschickt, wobei die Dosiervorrichtungen so angeordnet sind, daß sich die Dosierrichtungen in einer zum flächigen Substrat senkrechten oder davon abgewinkelten Ebene befinden.

Erfindungsgemäß können beliebige geeignete Dosiervorrichtungen eingesetzt werden, die die Abgabe einzelner Suspensionstropfen erlauben. Bevorzugt erfolgt dabei die Dosierung durch Verschieben beweglicher Kolben in der/den Dosiervorrichtung(en) (bzw. in einem entsprechenden Hohlraum der Dosiervorrichtung). Besonders bevorzugt werden Spritzen als Dosiervorrichtungen eingesetzt. Bei der besonders vorteilhaften miniaturisierten Ausführung des erfindungsgemäßen Verfahrens werden Mikroliter-Spritzen eingesetzt, die ein Volumen von 1 bis 1000 Mikroliter, besonders bevorzugt 10 bis 100 Mikroliter aufweisen.

Vorzugsweise wird eine Vielzahl unterschiedlich zusammengesetzter Materialien auf einem Substrat erzeugt. Vorzugsweise werden mindestens 100, besonders bevorzugt mindestens 1000 unterschiedliche Materialien auf dem

Substrat gebildet.

Vorzugsweise setzt man die als Komponenten der herzustellenden Materialkombinationen vorliegenden Pulver unter Einsatz geeigneter Dispergiermittel sowie organischer Lösungsmittel und/oder Wasser zu hochkonzentrierten Teilchensuspensionen um. Diese werden vorzugsweise direkt über feste Kolben in der Art von Mikroliterspritzen oder indirekt über als flüssige Kolben dienende Sperrflüssigkeiten in eine geeignete Spritze beziehungsweise Kanüle eingesaugt. Die eingesaugten Suspensionen werden sodann an einem vorgewählten Ort in Menge und Geschwindigkeit rechnergesteuert im Oberflächenbereich eines flächigen Substrats abgelegt.

Der Ausdruck "im Oberflächenbereich" bedeutet, daß die Materialien beispielsweise auf einem flächigen Substrat gebildet werden, wobei die dosierten Materialkomponenten nicht in das Substrat eindringen. Dies ist beispielsweise bei glatten Metall-, Keramik- oder Kunststoffsubstraten der Fall, in denen beispielsweise die dosierten Materialkomponenten in Vertiefungen aufgenommen werden können.

Es kann sich aber auch um zumindest teilweise poröse Substrate handeln, in die die dosierten Materialkomponenten zumindest teilweise einziehen oder eindringen. Dabei wird erfindungsgemäß das Material in der obersten Schicht des flächigen Substrats gebildet, d. h. im Oberflächenbereich. In diesem Fall beträgt die Eindringtiefe der dosierten Materialkomponenten vorzugsweise maximal 100 µm, insbesondere maximal 10 µm.

Der Ausdruck "Flächiges Substrat" bedeutet ein Substrat, das sich in zwei Raumrichtungen wesentlich stärker erstreckt als in der dritten Raumrichtung. Das flächige Substrat muß nicht eben sein, es kann sich beispielsweise um eine Reihe von Schälchen oder Vertiefungen auf oder in einer Platte handeln. Beispielsweise kann es sich um eine Tüpfelplatte handeln oder eine entsprechende Platte, die in regelmäßigen Abständen Vertiefungen aufweist. Die genaue Ausgestaltung des flächigen Substrates ist jedoch nicht beschränkt. Es können auch auf andere geeignete Weise einzelne Abschnitte (Matrixelemente) auf dem flächigen Substrat abgetrennt sein.

Der Ausdruck "unterschiedliche Oberflächenbereiche" beschreibt auf der Oberfläche des Substrats liegende räumlich voneinander unterschiedene Bereiche. Vorzugsweise sind diese Bereich räumlich voneinander abgegrenzt, so daß sich das flächige Substrat in einzelne definierte Plätze unterteilt.

Gemäß einer Ausführungsform der Erfindung wird das flächige Substrat dadurch in einzelne definierte Plätze unterteilt, daß die Dosierungen auf das Substrat in einem räumlichen Abstand erfolgt, der ein Zusammenfließen von dosierten Suspensionstropfen auf dem Substrat verhindert.

Gemäß einer weiteren Ausführungsform der Erfindung wird das flächige Substrat dadurch in einzelne definierte Plätze unterteilt, daß auf das flächige Substrat eine mit Bohrungen versehene Matrixplatte aufgelegt wird, die Dosierung in die Bohrungen erfolgt, die dosierten Suspensionstropfen mindestens so weit getrocknet werden, daß sie beim Abheben der Matrixplatte nicht auf dem Substrat zusammenfließen, und die Matrixplatte nach diesem Trocknen abgehoben wird.

Dabei werden vorzugsweise pro Platz auf dem Substrat insgesamt 1 bis 1000 µl, besonders bevorzugt 5 bis 100 µl Suspension dosiert.

Bei einer bevorzugten Durchführung legt man auf das eigentliche Substrat eine mit Bohrungen versehene Matrixplatte. In die Bohrungen werden die Suspensionen gleichzeitig oder nacheinander eindosiert, die Suspensionen über eine kleine geeignete Mischvorrichtung gemischt und nach teilweisem Eintrocknen der Mischung die Matrixplatte abgehoben. Als Material für die Matrixplatte werden wenig benetzbare Fluorkunststoffe wie Polytetrafluorethylen, Polyvinylidenfluorid oder ECTFE eingesetzt. Je nach Screeninganforderungen weisen die Matrixplatten Dicken von 0,5 bis 5 mm auf, bevorzugt 1 bis 2 mm. Die darin befindlichen Bohrungen zur Aufnahme der Suspensionen oder deren Mischungen haben Abstände von 1-2 mm, ihre Durchmesser betragen an der Basis 1-3 mm. Zur besseren Entformung weisen die Bohrungen Schrägen von mindestens 5° auf, wodurch die Materialproben die Form von stumpfen Kegeln erhalten, die mit der größeren Fläche auf der Substratplatte stehen. Auf eine Substratplatte von 150 x 150 mm Kantenlänge lassen sich so 1.000 bis 2.000 Materialproben unterbringen. Es ist auch möglich, ohne Matrixplatten zu arbeiten. Dazu muß gewährleistet sein, daß z.B. aus Mikroliterspritzen abgelegte Tropfen auf der Substratplatte nicht auseinanderfließen. Um dies zu gewährleisten, werden die Feststoffteilchen in Flüssigkeiten suspendiert, die einerseits eine möglichst hohe Oberlächenspannung aufweisen, andererseits mit der Substratplatte keine Wasserstoffbrückenbildung ausbilden. So fließt ein Tropfen aus Formamid mit seiner hohen Oberflächenspannung von 58 dyn/cm (Raumtemperatur) auf einer Fluorkunststoffplatte kaum auseinander, jedoch stärker auf einer Siliciumcarbidplatte. Ideal verhalten sich dagegen Lösungsmittel mit hoher Oberflächenspanung, die kaum Wasserstoffbrückenbindungen ausbilden können, insbesondere Propylencarbonat, Ethylencarbonat oder Gamma-Butyrolacton, die auf Siliziumcarbid, Titannitrid oder Gold Tropfen mit Randwinkeln nahe 90° ausbilden.

Die Erfindung betrifft zudem ein Verfahren zur kombinatorischen Testung der so erhaltenen Bibliotheken von Materialien, bei dem die auf einzelnen definierten Plätzen des Substrats vorliegenden Materialproben mit physikalischen und/oder chemischen Verfahren auf eine gewünschte Eigenschaft untersucht werden.

Die grundsätzliche Idee der Erfindung unter Benutzung von zwei oder mehreren Teilchensuspensionen besteht darin, daß mittels zweier oder mehrerer Dosiervorrichtungen unterschiedliche Materialkomponenten auf ein Substrat mit definierten Probenplätzen aufgebracht werden.

In einer Ausführungsform werden die Suspensionen der Komponenten aus einem gerührten Vorratsgefäß mittels von Aktuatoren bewegten Mikroliterspritzen für jede Komponente getrennt aufgezogen. Die Mikroliterspritzen werden je an einem Roboterarm so aufeinander zugefahren, daß sie auf einem gedachten Kegelmantel liegen und die Öffnungen der Kanäle sich nahezu in einem Punkt berühren. In diesem Punkt werden aus Spritzen über die Aktuatoren definierte Mengen der jeweiligen Suspensionen dosiert, und der so generierte Tropfen wird entweder durch Abheben der Spritzen oder Anheben der Substratplatte, bis der Tropfen die Substratplatte berührt, und Abheben der Spritzen auf der Substratplatte abgelegt. Entweder wird frei auf die Platte abgelegt oder in die Kavität einer Matrixplatte.

Wird aus den Spritzen mit verschiedener Geschwindigkeit gleichzeitig dosiert, so kann bei Gesamtvolumina um 10 µl auf zusätzliches Mischen verzichtet werden: Oft ist im nachfolgenden Sinterschritt die Diffüsionsgeschwindigkeit im Festkörper so groß, daß die Komponenten im Festkörper entsprechend dem thermodynamischen Gleichgewicht verteilt werden.

Ansonsten kann die Komponentenmischung innerhalb einer Kavität einer Matrixplatte vermischt werden. Dies kann in Form einer Vormischung geschehen mit anschließender Plazierung der Mischung auf dem flächigen Substrat oder direkt auf demselben beziehungsweise in dessen Kavitäten.

In einer bevorzugten Ausführung legt man die Tropfen der Komponenten nicht sofort auf der eigentlichen Substratplatte ab, sondern man legt sie auf einer weiteren Platte ab, mischt die Komponenten auf der getrennten Platte und überführt die Mischung dann mit einer einzigen Dosierspritze auf die eigentliche Substratplatte. Dies hat den Vorteil, daß man mit Sicherheit ein homogen vermischtes Material erhält. Außerdem kann man eine etwas größere Menge anmischen, zum Beispiel 20-100 µl, die sich mit geringerem Fehler dosieren läßt, und verwendet von dieser Menge nur einen Teil, zum Beispiel 5 bis 20 µl. Diese Verfahrensweise ist dadurch gekennzeichnet, daß die dosierfähigen Materialkomponenten zunächst auf einem Hilfssubstrat dosiert und vermischt werden und die Mischung sodann mit der Dosiervorrichtung aufgenommen und auf das Substrat dosiert wird.

Es ist auch möglich, den direkten Kontakt eines Spritzenkolbens mit den Suspensionen zu vermeiden, indem man über die Spritzen selbst nur eine inerte und mit dem Suspensionsmittel nicht mischbare Flüssigkeit bewegt und mit dem so erzeugten flüssigen Kolben die Suspensionen aufsaugt und dosiert. Dieses Vorgehen bringt den Vorteil, daß ein metallischer Kolben nicht im Kontakt mit suspendierten harten Teilchen steht.

In einer weiteren Ausführungsform ist es möglich, die Suspensionen der Komponenten nacheinander in die gleiche Spritze mit festem oder flüssigem Kolben zu saugen und daraus die Suspensionen zu dosieren, wobei die Spritze komplett entleert wird. Bei dieser Ausführungsform ist ein nachträgliches Homogenisieren der Komponentenmischung angezeigt.

Es ist angezeigt, die Kuppe der Proben nach dem Antrocknen und solange die Pulverhäufung noch fließfähig ist, über einen automatisch geführten Stift mit planer Stirnfläche zu ebnen, um für Meßsonden beim späteren Screening eine möglichst ebene Auflagefläche zu haben. Dies ist weniger von Bedeutung, wenn ringförmige Sonden zum Einsatz kommen, die sich um die Wölbung legen.

Das Füllen der Spritzen und Dosieren der Suspensionen wird über einen Rechner gesteuert, der auch die Screening-Apparatur steuert. Entsprechend den Vorgaben werden die Mengen der einzelnen Komponenten den Ortskoordinaten auf der Substratplatte zugeordnet und dort dosiert beziehungsweise vorgemischt. Dabei können die Mischungsverhältnisse über einen Zufallsgenerator bestimmt werden. Einzugebende Vorgaben sind beispielsweise die Unterteilung der Anteile der einzelnen Komponenten, oder es wird vorgegeben, daß bestimmte Komponenten mit einem Mindest- oder Maximalanteil an der Mischung beteiligt sein sollen.

Die ausgeführten Kombinationen, die normalerweise nicht wiederholt werden, werden gespeichert. Wird an der Stellung eines Spritzenaktuators festgestellt, daß die Spritze neu zu füllen ist, so fahren alle Spritzen zu den Vorratsbehältern und werden frisch befüllt.

Zur Herstellung und Ablegung einer Komponentenmischung werden pro Mischung nur 1-100 Sekunden benötigt.

Im gleichen Zeitmaßstab werden die Proben gescreent. Inklusive des sich nach der Synthese anschließenden Sinterns zum eigentlichen Material und paralleler Nutzung der Zeiten von Probeneinstellung, Sintern und Screenen können pro 24 Stunden je nach Probengröße und Prüfdauer 1.000 bis 5.000 Materialproben gescreent werden.

Nach Antrocknen der Materialproben auf der Substratplatte wird die Substratplatte in einen Sinterofen überführt, in welchem bei materialadäquaten Temperaturen und Atmosphären die eigentlichen zu screenenden Materialien erzeugt werden. Hierbei werden die Proben mit Geschwindigkeiten von 1 bis 20 °C/min aufgeheizt, 0,5 bis 5 Stunden bei Sintertemperatur belassen, und danach wird der Ofen abgekühlt. Beim Sintern schrumpfen die Proben üblicherweise entsprechend dem Volumenanteil, der nicht mit anorganischem Pulver ausgefüllt war. Bei 50 % Volumenanteil beträgt der lineare Schrumpf beispielsweise ca. 21 %. Nach Entnahme der Platte aus dem Ofen und nach Abkühlen wird sie dem Screening-Roboter zugeführt, der die zu optimierende Eigenschaft abprüft.

Der Screening-Roboter führt seine Sonde entsprechend dem EDV-Programm und den Koordinaten der Materialproben über die Proben und prüft einen Zyklus entsprechend den Prüfvorgaben. Entsprechend der zu prüfenden Eigenschaften sind die Prüfsonden gestaltet: Sollen mechanische Eigenschaften wie Härte oder Steifigkeit geprüft

werden, so verwendet man eine steife Substratplatte, zum Beispiel aus Siliziumcarbid. Die Prüfsonde trägt einen Diamanten, der auf die Proben gedrückt wird, das Kraft/Weg-Diagramm wird gemessen und im Rechner Probe für Probe gespeichert. Die Messungen können bei verschiedenen Temperaturen oder temperierter Sonde vorgenommen werden.

Das Screenen dielektrischer Eigenschaften erfolgt, indem die Materialpoben auf einer elektrisch leitenden Substratplatte befindlich sind, zum Beispiel Siliziumcarbid oder auf einer mit Gold oder Titannitrid beschichteten Keramik- oder Metallplatte, und die Sonde mit einer konstanten Prüfkraft aufgelegt wird. Sodann wird an die Materialprobe eine Wechselspannung mit interessierender Frequenz und Spannung angelegt und die interessierenden dielektrischen Eigenschaften gemessen. Auch dies kann bei verschiedenen Meßtemperaturen erfolgen.

Zum Screenen magnetischer Eigenschaften trägt die Sonde eine Minispule, die mit Strömen variabler Frequenz beaufschlagt wird. Über eine Sekundärspule erhält man die Informationen über magnetische Permeabilität, Hysteresewerte, Gütefaktoren oder sonstige wichtige Eigenschaften. Die Substratplatte sollte zur Vermeidung störender Wirbelströme aus einem nichtleitenden Material wie Aluminium- oder Zirkonoxid bestehen.

Zum Screenen der Oxidations- bzw. Zunderfestigkeit von Materialien werden die Proben samt inerten Substratplatten in der interessierenden Atmosphäre aufgeheizt, und mit einer Kamera werden das Verschwinden des Reflexionsvermögens, die Ausbildung von Anlauffarben oder sonstige Verfärbungen und Veränderungen beobachtet.

Zum Screenen der Medienbeständigkeit werden die Materialproben samt inerter Substratplatte aus keramischen Materialien dem gasförmigen oder flüssigen Medium bei interessierenden Temperaturen ausgesetzt und in einem ersten Schritt auf optisch sichtbare Veränderungen hin geprüft.

Elektrische Widerstände bzw. Impedanzen können über eine angelegte Elektrode frequenzabhängig geprüft werden.

Thermospannungen und Thermoströme können an den einzelnen Materialproben durch Anlegen einer temperierten Elektrode relativ zueinander gescreent werden.

Die Ionenleitfähigkeit der Materialproben kann ebenfalls leicht gescreent werden. So läßt sich das Leitvermögen für Sauerstoffionen screenen, indem man den elektrischen Widerstand bei bestimmten Temperaturen und Sauerstoffpartialdrücken mißt.

Die Speicherfähigkeit von Materialproben für Gase, beispielsweise Wasserstoff oder Sauerstoff läßt sich schnell screenen, indem die Substratplatte mit den Materialproben bei Raumtemperatur dem zu prüfenden Gas ausgesetzt wird. Anschließend werden die Proben kurz mit einem geheizten Röhrchen kontaktiert, das mit einem Massenspektrometer verbunden ist, um zu messen, ob und wieviel des Gases bei vorgegebenen Temperaturen oder während des Aufheizens abgegeben wird.

Lichtelektrische Effekte lassen sich schnell screenen, indem der elektrische Widerstand oder Ausbildung einer Photospannung bei Änderung der Belichtung gemessen wird.

Besonders einfach gestaltet sich das Sreenen nach Supraleitfähigkeit. Die Materialproben werden von der Substratplatte abgeschert und in einen Thermobehälter überführt, der zum Beispiel flüssigen Stickstoff enthält. Am Boden des Behälters befindet sich ein Permanentmagnet. Materialproben, die schwimmen oder schweben, weisen Sprungtemperaturen von mindestens -196 °C auf. Je nach Kühlmedium kann das Niveau der zu screenenden Sprungtemperaturlimits eingestellt werden.

Viele marktrelevante Materialeigenschaften können so schnell und einfach gescreent werden.

Liefern Tests direkt oder über Meßwandler Meßwerte, so werden diese für jede Materialpobe oder Koordinate auf der Substratplatte gespeichert, wie zum Beispiel Meßkurven. Das EDV-Programm wird so gestaltet, daß ein besonders charakteristischer Wert in einer Farbskala auf einem Bildschirm dargestellt wird. So erhält man mit einem Blick eine Übersicht über diese charakteristische Größe auf der gesamten Substratplatte. Interessant erscheinende Punkte werden angeklickt (aufgerufen), und man erhält sowohl die Meßkurve als auch weitere wichtige Parameter wie dosierte Zusammensetzung, Koordinaten, etc.

Vorzugsweise sind die Materialkomponenten ausgewählt aus Suspensionen und Pulvern von Elementen der Gruppen IB, IIB, IIIB, IVB, VB, VIB, VIIB und VIII, Lanthanoiden, Actinoiden, IA, IIA, IIIA, IVA, VA und VIA oder deren Verbindungen oder Gemischen davon. Unter Pulver sind sowohl Metallpulver als auch Oxide, Carbide oder Nitride zu verstehen. Dabei können die Suspensionsmittel zum Beispiel Wasser, Paraffine oder Gemische von Lösungsmitteln mit geeigneten Dispergatoren wie etwa organischen Additiven sein. Werden Suspensionen dosiert, so sollten die Partikel, die in der Dispersion/Suspension enthalten sind, vorzugsweise kleiner als 50 Mikrometer, besonders bevorzugt kleiner als 10 Mikrometer sein, um eine Verstopfung der Düsen zu vermeiden.

Für das erfindungsgemäße Verfahren ist es vorteilhaft, feinteilige Pulver in stabile Suspensionen zu überführen. Um möglichst wenig Dispergiermittel verdampfen zu müssen und eine hohe Sinterdichte zu erhalten, sollten möglichst hohe Volumenanteile von Feststoff bei gleichzeitig niedriger Viskosität der zu dosierenden Suspensionen eingesetzt werden. Volumengehalte von vorzugsweise 20 bis 50 Vol.-%, besonders bevorzugt 35 bis 45 Vol.-% werden beim Einsatz geeigneter Dispergatoren erhalten.

Da sich die Anforderungen an Dispergatoren durch die große Zahl verschiedener Pulver und möglicher Dispergiermedien stark unterscheiden, sind unwirtschaftliche Einzellösungen für Dispergierprobleme, das heißt ein bestimmter Dispergator für eine spezielle Kombination von Pulver und Dispergiermedium, weit verbreitet.

Dagegen weisen Dispergatoren der Formel I

$$(R^1)_x\text{-A-}[(B\text{-}O)_n\text{-}Z]_y \qquad (I)$$

ein sehr breites Wirkungsspektrum auf.

Im einzelnen haben die Variablen und Gruppierungen folgende Bedeutung:

A Sauerstoff oder eine -CO-O- Gruppe, vorzugsweise Sauerstoff, wenn x und y für 1 stehen; weiterhin Stickstoff, wenn x + y = 3 ist,

B Ethyliden oder 1,2-Propyliden, vorzugsweise Ethyliden,

Z eine der Gruppen

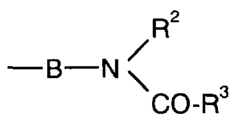
,
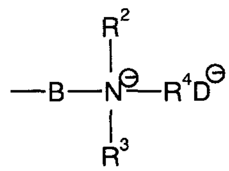
,
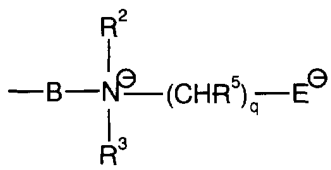
,
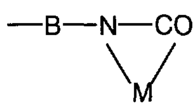
,
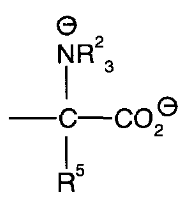

wobei folgende Gruppen bevorzugt sind:
$-CH_2CH_2N^+ R^2R^3\text{-}CH_2\text{-}CO_2\text{-}$,

$D^-$ Acetat, Formiat, Propionat oder Hydroxyd, vorzugsweise Acetat,

$E^-$ Carboxylat oder Sulfonat, vorzugsweise Carboxylat,

M eine Brückengruppierung zur Vervollständigung eines Pyrrolidon-, - oder Succinimid- oder Maleinimidrings als Gruppierung

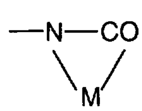

n 1 bis 50, vorzugsweise 2 bis 25,

q 1 bis 4, vorzugsweise 1,

x, y 1 oder 2 mit der Maßgabe, daß $x+y \leq 3$ ist,

$R^1$ ($C_8$-$C_{30}$)- Alkylgruppe oder wenn A = 0 ($C_4$-$C_{12}$)-alkylsubstituierter Phenylrest, vorzugsweise ($C_{12}$-$C_{18}$)-Alkylgruppe, darunter besonders Gemische aus ($C_{13}$/$C_{15}$)-Oxoalkoholresten sowie ($C_{12}$/$C_{14}$)- und ($C_{16}$/$C_{18}$)-Fettalkoholresten; im Fall, daß A für Sauerstoff steht, vorzugsweise tert.-Butyl-, iso-Octyl- und iso-Nonylphenyl,

$R^2$, $R^3$, $R^4$ Wasserstoff, Methyl oder Ethyl, vorzugsweise Wasserstoff oder Methyl,

$R^5$ Wasserstoff, Methyl.

Bei den Verbindungen (I) handelt es sich um Alkylenoxid- oder Polyalkylenoxidderivate mit Resten $(R^1)_x$-A- und -Z als terminierende Gruppen.

Die Dispergatoren der allgemeinen Formel (I) finden erfindungsgemäß Verwendung zur Dispergierung feinteiliger Feststoffe in einem fließfähigen Medium (Dispergiermittel). Sie sind beispielsweise in EP-A-0 582 209 beschrieben.

Derartige Feststoffe sind bevorzugt oxidische oder nichtoxidische anorganische Pulver und Metallpulver.

Feinteilig bedeutet, daß die mittleren Korngrößen im allgemeinen 0,1 bis 10 µm betragen.

Fließfähige Medien (Dispergiermittel) umfassen Flüssigkeiten, die bei Raumtemperatur flüssig sind, wie Wasser oder organische Lösungsmittel wie Alkohole, Ether, Etheralkohole, Ester, Ketone, aliphatische und aromatische Kohlenwasserstoffe, halogenierte Kohlenwasserstoffe, Amine, Amide und Nitroverbindungen. Es können auch Mischungen dieser Stoffe verwendet werden.

Aus den oben genannten feinteiligen Feststoffen, den fließfähigen Medien sowie Verbindungen der Formel (I) sind erfindungsgemäß zu applizierende Suspensionen erhältlich.

Die Herstellung der erfindungsgemäß eingesetzten Suspensionen erfolgt in an sich bekannter Weise. So hat es sich besonders bewährt, die Dispergierung mit Ultraschallwellen vorzunehmen, indem Dispergiermedium und Dispergator in einem Ultraschallbad mit dem Feststoff versetzt werden.

Für größere Ansätze wird man zweckmäßigerweise auf die Vermahlung, zum Beispiel in einer Schwingmühle oder Kugelmühle, zurückgreifen. Auch extrem schnell laufende Rührwerke sind zur Dispersionsbereitung geeignet. Diese weisen Drehzahlen von 3.000 bis 40.000 $min^{-1}$ auf.

Im Sinne der Erfindung als hocheffektive Dispergatoren zur Herstellung von Zubereitungen stabiler, hochkonzentrierter und niedrigviskoser Suspensionen sind auch Dispergatoren der folgenden Formeln gut geeignet:

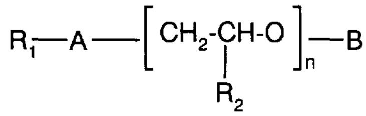

oder

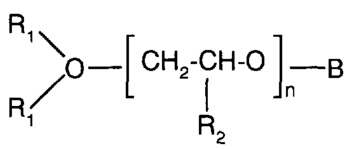

oder

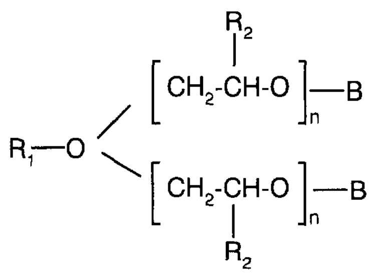

in denen $R_1$ ein aliphatischer Kohlenwasserstoffrest mit 10 bis 40 C-Atomen, A die Gruppierung -O- oder

$$-C(O)-O-,$$

$R_2$ an unterschiedlichen Positionen unabhängig voneinander -H, $-CH_3$ oder $-CH_2-CH_3$, B die Gmppiemng $-HSO_3$, $-H_2PO_4$,

$$-(CH_2)_x-C(O)-OZ,$$

$$-(CH_2)-NH_2,\ -NH-(CH_2)_x-NH_2 \text{ oder}$$

$$-(CH_2)_x-C(O)-NY_2,$$

in der Z für Wasserstoff, Alkalimetall oder Ammonium,
x für eine ganze Zahl von 1 bis 3 und y für H oder $-CH_3$ steht,
D die Gruppierung >N- oder

$$>N-C(O)-(CH_2)_x-,$$

in der x ebenfalls die obige Bedeutung hat und n eine ganze Zahl von 1 bis 40 ist, bedeutet.

Vorzugsweise werden von den Dispergiermitteln 0,1 bis 10 Gew.-%, besonders bevorzugt 0,5 bis 5 Gew.-%, bezogen auf den Feststoff eingesetzt.

Werden Wasser oder sehr polare organische Lösungsmittel als Suspensionsmedium eingesetzt, so hat sich die sogenannte ionische Stabilisierung der in Schwebe zu haltenden Teilchen als günstig erwiesen. Für die erfindungsgemäße Anwendung als besonders gut geeignet haben sich Dispergatoren erwiesen, die Salze der Ölsäure mit Tetramethylammoniumhydroxid oder Tetrabutylammoniumhydroxid im Molverhältnis 1:1 sind.

Die Erfindung betrifft auch eine Vorrichtung zur Durchführung des beschriebenen Verfahrens, umfassend einen rechnergesteuert bewegbaren Roboterarm, der eine oder mehrere 1 bis 1000 µl fassende Dosiervorrichtungen, z.B. Spritzen trägt, sowie einen Rechner zur Ansteuerung des Roboterarms.

Beispiele

Die folgenden Beispiele verdeutlichen die Suspensionsherstellung sowie die Dosierbarkeit der Suspensionen.

Beispiel 1:

81,4 g eines nicht porösen Carbonyleisenpulvers mit Korngrößen zwischen 2 und 8 µm, 11,8 g t-Amylalkohol und 0,5 g eines Dispergators, der durch Ethoxylierung eines $C_{13}/C_{15}$-Fettalkoholgemisches mit durchschnittlich 7 Mol Ethylenoxid pro Mol Fettalkohol, Substitution der endständigen OH-Gruppe durch eine $NH_2$-Gruppe und deren Umsetzung mit Maleinsäureanhydrid hergestellt wurde, wurden mit einem ultraschnellen Rührer mit 12 mm Durchmesser bei 15.000 $min^{-1}$ über ca. 15 min gemischt.

Es wurde eine Suspension erhalten, die 40 Vol.-% Eisenpulver enthielt.

Diese Suspension wurde durch eine Mikroliterspritze mit 10 µl Gesamtinhalt eingesaugt. Der Kolbendurchmesser der Spritze betrug 0,5 mm, der Kanülendurchmesser ca. 0,2 mm bei 45 mm Kanülenlänge.
Nach 5 min Lagerung der gefüllten Spritze wurden 2 µl dosiert, nach weiteren 10 min Lagerung 3 µl und nach nochmaligen 10 min Lagerung der Rest von 5 µl ohne Schwierigkeiten. Diese Dosierprozedur wurde ohne Schwierigkeiten zehnmal wiederholt.

Beispiel 2:

39,5 g eines Aluminiumoxidpulvers mit einem Maximum der Korngrößenverteilung bei 0,9 µm, 13,8 g Propylencarbonat sowie 0,7 g des Tetrabutylammoniumsalzes der Ölsäure wurden wie in Beispiel 1 gemischt. Es wurde eine stabile Suspension erhalten, die 45 Vol.-% Aluminiumoxid enthält. Diese Suspension ließ sich ohne Schwierigkeiten mit einer Mikroliterspritze mit den Dimensionen aus Beispiel 1 im gleichen Dosierzyklus dosieren.

Beispiel 3:

39,5 g des Aluminiumoxids aus Beispiel 2 wurden analog Beispiel 2 mit 11,5 g Wasser sowie 0,7 g Tetrabutylammoniumsalz der Ölsäure gemischt. Die erhaltene stabile Suspension hatte einen Gehalt von 45 Vol.-% Aluminiumoxid und ließ sich wie in Beispiel 1 gezeigt ohne Schwierigkeiten dosieren.

Beispiel 4:

330,5 g des Eisenpulvers aus Beispiel 1 wurden analog diesem Beispiel mit 67,3 g Propylencarbonat sowie 2,0 g des Salzes aus Ölsäure und Tetrabutylammoniumhydroxid gemischt. Die so erhaltene Suspension hatte einen Gehalt von 42 Vol.-% Eisenpulver und ließ sich ohne Schwierigkeiten aus einer 10 µl-Spritze dosieren. Auf verschiedensten Unterlagen, nämlich Stahl, Aluminiumoxid, Gold und Titannitrid wurden nicht auseinanderfließende Tropfen mit Randwinkeln von 70-90° erhalten.

Beispiel 5:

100 g Aluminiumoxid aus Beispiel 2 wurden analog diesem Beispiel mit 31,4 g Gamma-Butyrolacton sowie 3,0 g des Salzes aus Ölsäure und Tetrabutylammoniumhydroxid gemischt. Die so erhaltene Suspension hatte einen Gehalt von 45 Vol.-% Aluminiumoxidpulver und ließ sich ohne Schwierigkeiten aus einer 10 µl-Spritze dosieren.
Auf Stahl, Aluminiumoxid, Zirkonoxid, Gold und Titannitrid flossen die Tropfen bei der Ablage nicht auseinander. Sie wiesen Randwinkel von 80-90° auf.

## Patentansprüche

1. Verfahren zur kombinatorischen Herstellung von Materialproben in Form einer zweidimensionalen Matrix im Oberflächenbereich eines flächigen Substrats, bei dem mindestens zwei unterschiedliche dosierfähige Materialkomponenten als Suspension aus einer oder mehreren Dosiervorrichtungen, die die Abgabe einzelner Suspensionstropfen erlauben, auf dieselbe Stelle des Substrats dosiert werden, so daß an unterschiedlichen Oberflächenbereichen des Substrats Materialien mit unterschiedlicher Zusammensetzung erhalten werden.

2. Verfahren nach Anspruch 1, **dadurch gekennzeichnet, daß** das flächige Substrat horizontal angeordnet ist und im wesentlichen vertikal von oben beschickt wird, wobei die Dosiervorrichtungen so angeordnet sind, daß sich die Dosierrichtungen in einer zum flächigen Substrat senkrechten oder davon abgewinkelten Ebene befinden.

3. Verfahren nach Anspruch 1 oder 2, **dadurch gekennzeichnet, daß** die Dosierung durch Verschieben beweglicher Kolben in der/den Dosiervorrichtung(en) erfolgt.

4. Verfahren nach einem der Ansprüche 1 bis 3, **dadurch gekennzeichnet, daß** die dosierfähigen Materialkomponenten zunächst auf einem Hilfssubstrat dosiert und vermischt werden und die Mischung sodann mit der Dosiervorrichtung aufgenommen und auf das Substrat dosiert wird.

5. Verfahren nach einem der Ansprüche 1 bis 4, **dadurch gekennzeichnet, daß** die dosierfähigen Materialkomponenten ausgewählt sind aus Suspensionen von Pulvern der Elemente der Gruppen IB, IIB, IIIB, IVB, VB, VIB, VIIB oder VIII, Lanthanoiden, Actinoiden, IA, IIA, IIIA, IVA, VA, VIA des Periodensystems der Elemente oder deren

Verbindungen oder Gemischen davon.

6. Verfahren nach einem der Ansprüche 1 bis 5, **dadurch gekennzeichnet, daß** das flächige Substrat in einzelne definierte Plätze unterteilt ist, die räumlich voneinander abgegrenzt sind.

7. Verfahren nach Anspruch 6, **dadurch gekennzeichnet, daß** das flächige Substrat dadurch in einzelne definierte Plätze unterteilt wird, daß die Dosierungen auf das Substrat in einem räumlichen Abstand erfolgen, der ein Zusammenfließen von dosierten Suspensionstropfen auf dem Substrat verhindert.

8. Verfahren nach Anspruch 6, **dadurch gekennzeichnet, daß** das flächige Substrat dadurch in einzelne definierte Plätze unterteilt wird, daß auf das flächige Substrat eine mit Bohrungen versehene Matrixplatte aufgelegt wird, die Dosierung in die Bohrungen erfolgt, die dosierten Suspensionstropfen mindestens soweit getrocknet werden, daß sie beim Abheben der Matrixplatte auf dem Substrat nicht zusammenfließen, und die Matrixplatte nach diesem Trocknen abgehoben wird.

9. Verfahren nach einem der Ansprüche 6 bis 8, **dadurch gekennzeichnet, daß** pro Platz auf dem Substrat insgesamt 1 bis 1000 µl Suspension dosiert werden.

10. Verfahren zur kombinatorischen Testung von Materialproben, die nach einem Verfahren gemäß einem der Ansprüche 1 bis 9 erhalten werden, bei dem die auf einzelnen definierten Plätzen des Substrats vorliegenden Materialproben mit physikalischen und/oder chemischen Verfahren auf eine gewünschte Eigenschaft hin untersucht werden.

11. Vorrichtung zur Durchführung eines Verfahrens nach einem der Ansprüche 1 bis 9, umfassend einen rechnergesteuert bewegbaren Roboterarm, der eine oder mehrere 1 bis 1000 µl fassende Dosiervorrichtungen trägt, sowie einen Rechner zur Ansteuerung des Roboterarms.